# EUROPEAN PATENT SPECIFICATION

(11) **EP 0 807 553 B1**
(45) Date of publication and mention of the grant of the patent: **31.10.2001**
(21) Application number: 97107953.8
(22) Date of filing: 15.05.1997
(51) Int. Cl.: B60R 16/00

(54) **A control device for an acoustic indicator, particularly for the steering wheel of a motor vehicle**
Steuergerät für einen akustischen Indikator von einem Kraftfahrzeug-Lenkrad
Un dispositif de commande pour un indicateur acoustique d'un volant de véhicule à moteur

(30) Priority: 17.05.1996 IT TO960414
(43) Date of publication of application: 19.11.1997
(73) Proprietor: FIAT AUTO S.p.A., 10135 Torino (IT)
(72) Inventor: Tarzia, Antonio, 10064 Pinerolo (IT)
(74) Representative: Plebani, Rinaldo

(56) References cited:
- DE-C- 4 436 291
- DE-U- 7 805 602
- US-A- 4 590 340

## Description

The present invention concerns a control device for an acoustic indicator, particularly for the steering wheel of a motor vehicle; more particularly it concerns an improved acoustic indicator control device, including at least a second additional push-button located on a rear face, with respect to the driver, of the spokes of the steering wheel, joined to the known front push-button, and in a better position to enable the quicker and easier operation of the acoustic indicator by utilising all of the fingers of the hands as well as the thumb.

In known acoustic indicator control assemblies located on the steering wheel of the motor vehicle, the hub of which is not available due to the presence of, for example, a so-called "air bag", the push-buttons for operating the acoustic indicator are located on the spokes where they join the rim of the steering wheel, on the side facing the driver. Such a push-button is known from US-A-4 590 340.

In this position, the push-buttons are only readily operable by the driver's thumbs when the steering wheel is gripped in the region adjacent the push-buttons, that is, at the junction between the spokes and the rim of the steering wheel; this situation only arises when the car is travelling in a straight line and the steering wheel remains in the straight ahead position; when travelling on winding routes when the steering wheel is continually turned and the rim is therefore gripped mainly away from the junction with the spokes, it becomes difficult, at times impossible, to operate the push-buttons with the thumb without removing a hand from the steering wheel, to the detriment of driving safety.

The object of the present invention is therefore to provide an acoustic indicator control device located on the spokes of the steering wheel of a motor vehicle, which is free from the disadvantages described above and which enables the push-button or push-buttons to be operated more quickly and easily without having to remove the thumb from the steering wheel, and with the possibility also of using the other fingers of the hand.

In accordance with the stated object, there is provided a control device for an acoustic indicator, particularly for the steering wheel of a motor vehicle, including means for actuating the said acoustic indicator, disposed on at least one spoke of the said steering wheel and operable by at least one of the driver's fingers, and electrical contact means disposed on the said spoke and actuated by the said actuation means to activate the said acoustic indicator, characterised in that the said actuation means include first and second push-buttons for activating the said acoustic indicator, located on opposite faces of the said at least one spoke, each of the said push-buttons being able to actuate the said contact means in order to activate the said acoustic indicator.

According to a further aspect of the invention, the acoustic indicator control device is characterised in that the said first and second push-buttons are joined by a connection element passing through the thickness of the said spoke.

A detailed description of a preferred embodiment of the acoustic indicator control device according to the invention, will now be given by way of non-limitative example, with reference to the accompanying drawings, in which:
Figure 1 is a front view in partial section, from the side opposite the driver, of a portion of a motor vehicle steering wheel carrying an acoustic indicator control device according to the present invention; and
Figure 2 is a partial section on an enlarged scale of the steering wheel of Figure 1, taken on the line II-II.

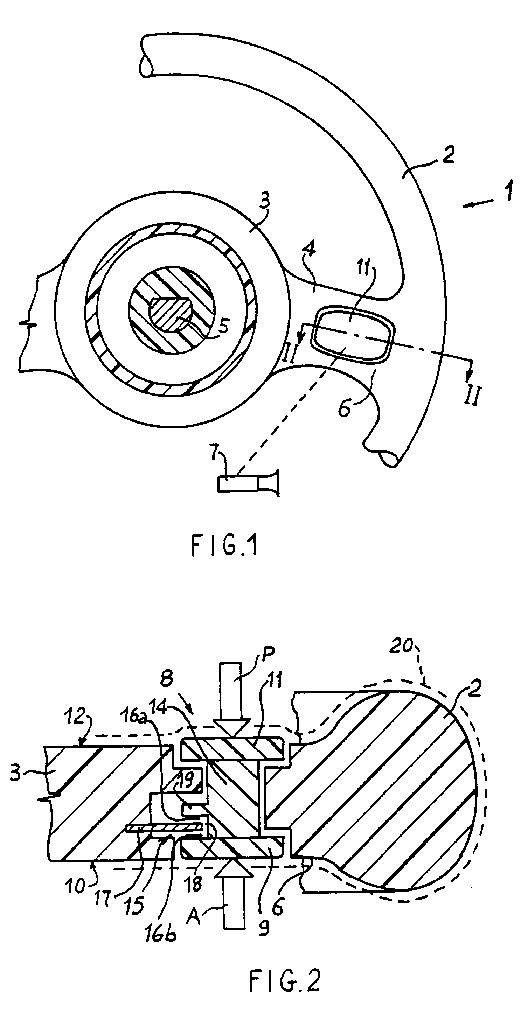

With reference to Figures 1 and 2, a steering wheel 1 of a motor vehicle is constituted by a rim 2, a hub 3 and one or more spokes 4 joining the rim 2 to the hub 3; the hub 3 is mounted on a steering column 5 of the steering wheel about which the steering wheel 1 is turnable in both directions.

According to a preferred, non-limitative embodiment, the steering wheel 1 has two spokes 4a and 4b disposed in a conventional known position at approximately 180° with respect to each other or, more commonly, according to the hands of a clock in the "ten-to-two" position; in the rest position, that is, when driving in a straight line, the spokes are disposed such that they are aligned substantially horizontally.

Since, in current models of motor vehicles, the interior of the hub 3 is reserved for housing emergency devices for the driver's safety in case of an accident, such as the so-called "air bag", the device for controlling the acoustic indicator or horn 7 is located on the spokes 4, in the region 6 where the spokes 4 join the rim 2 of the steering wheel 1; for simplicity, only one of two possible horn control devices is represented in the drawings; in particular, in some sports car steering wheels, the zone 6 is partly sunken so as to form a depression to improve the grip of the driver's thumbs on the steering wheel.

To overcome the disadvantage that the currently known control devices do not always enable the rapid and timely operation of the horn 7, the control device according to the invention includes two actuation means 8 constituted by a first push-button 9 disposed on a front face 10 of the spoke 4, facing the driver, in a position adjacent the junction 6 of the spoke 4 with the rim 2 of the steering wheel 1, and a second push-button 11 located on the opposite face 12 of the spoke 4 and attached to the first push-button by a connection element 14, constituted by a substantially rigid bar 14 joined to both push-buttons 9, 11, and which passes through the thickness of the spoke 4.

In this way the control device can be operated in two ways because the first push-button 9 can be operated by the driver's thumb and the second, opposite, push-button 11 can be operated by the other fingers when the steering wheel is turned to a position in which the thumb is unable easily to operate the first, front push-button 9.

The control device further includes electrical contact means 15 disposed on the spoke 4 and actuated by one or other of the two push-buttons 9 and 11; the contact means 15 are constituted by a switch of known type, for example, of capacitive type, in which two movable electrically conductive elements respectively close an activation circuit, not shown, of the horn 7 when they are brought together. In a preferred non-limitative embodiment, the two electrically conductive elements are respectively constituted by a pair of conductive elements 16a and 16b, mounted opposite each other and spaced apart on the bar 14, and movable with respect to a fixed conductive element 17 mounted between the elements 16 on the spoke 4.

The conductive elements 16 are carried on a support 18 of the bar 14 formed between a tab 19 and one of the push-buttons 9 or 11, for example, the push-button 9 in Figure 2.

Therefore, by pressing either of the push-buttons 9 or 11 respectively with the thumb in the direction indicated by an arrow "A", or with the other fingers in the direction of the arrow "P", the conductive elements 16 and 17 in both cases close an electrical circuit which activates the horn 7.

The push-buttons 9 and 11 are held in an intermediate position in which the conductive elements 16a and 16b are equidistant from the fixed conductive element 17 by a resilient biasing member such as, for example, a double acting leaf spring which, for simplicity, is not shown in the drawings.

According to a different embodiment of the control device according to the present invention, the push-buttons 9 and 11 may be separated from each other and each of them associated with a conductive element 16a or 16b so as separately to activate the horn 7, it still being the case that the rear push-button 11 is operated by the other fingers of the hand which grip the back of the steering wheel with respect to the driver.

The rear push-button 11 projects (it is shaped) slightly from the face 12 of the spoke 4 to facilitate the location of the same push-button by the fingers which grip the back of the steering wheel 1 with respect to the driver, especially when steering.

To improve the aesthetic appearance of the steering wheel 1 having the double actuation control device according to the invention, the spokes 4 and the rim 2 may be covered with a cover 20 of aesthetically appropriate material, which also covers the push-buttons 9 and 11.

## Claims

1. A control device for an acoustic indicator (7) for the steering wheel (1) of a motor vehicle, including means (8) for actuating the said acoustic indicator (7) disposed on at least one spoke (4) of the said steering wheel (1), and operable by at least one of the driver's fingers, and electrical contact means (15) disposed on the said spoke (4) and actuated by the said actuation means (8) to activate the said acoustic indicator (7), **characterised in that** the said actuation means (8) include a first push-button (9) and a second push-button (11) for activating the said acoustic indicator (7), disposed on opposite faces (10; 12) of the said at least one spoke (4), each of the said push-buttons (9; 11) being able to actuate the said contact means (15) for activating the said acoustic indicator (7).

2. A control device for an acoustic indicator (7) according to Claim 1, **characterised in that** the said push-buttons (9; 11) are connected by a connection element (14) which extends through the thickness of the said spoke (4).

3. A control device for an acoustic indicator (7) according to Claim 2, **characterised in that** the said connection element is constituted by a substantially rigid bar (14) provided with means (18; 19) for actuating the said electrical contact means (15).

4. A control device for an acoustic indicator according to any preceding claim, **characterised in that** the said contact means (15) include an electrical switch constituted by a pair of conductive elements (16a; 16b) mounted facing and spaced apart on the said connection element (14), and movable with respect to a fixed conductive element (17) mounted on the spoke (4) in an intermediate position between the conductive elements (16a; 16b).

5. A control device for an acoustic indicator according to any preceding claim, **characterised in that** the said second push-button (11) actuates the said electrical contact means (15) independently of the said first push-button.

6. A control device for an acoustic indicator according to any preceding claim, **characterised in that** the said second push-button (11) projects from a rear face (12) of the said spoke (4) to facilitate the location of the said push-button (11) by the driver's fingers which grip the back of the said steering wheel (1) with respect to the driver.

## Patentansprüche

1. Steuervorrichtung für ein Schallsignalgerät (7), für das Lenkrad (1) eines Kraftfahrzeugs, umfassend Einrichtungen (8) zum Betätigen des besagten Schallsignalgeräts (7), die auf mindestens einer Speiche (4) des besagten Lenkrades (1) angeordnet und durch mindestens einen der Finger des Fahrers bedienbar sind, und elektrische Kontakteinrichtungen (15), die auf der besagten Speiche (4) angeordnet sind und durch die besagten Betätigungseinrichtungen (8) betätigt werden, um das besagte Schallsignalgerät (7) zu aktivieren, **dadurch gekennzeichnet, daß** die besagten Betätigungseinrichtungen (8) einen ersten Drucktaster (9) und einen zweiten Drucktaster (11) zum Aktivieren des besagten Schallsignalgeräts (7) umfassen, die auf entgegengesetzten Seiten (10; 12) der besagten mindestens einen Speiche (4) angeordnet sind, wobei jeder der besagten Drucktaster (9; 11) imstande ist, die besagten Kontakteinrichtungen (15) zu betätigen, um das besagte Schallsignalgerät (7) zu aktivieren.

2. Steuervorrichtung für ein Schallsignalgerät (7) nach Anspruch 1, **dadurch gekennzeichnet, daß** die besagten Drucktaster (9; 11) durch ein Verbindungselement (14) verbunden sind, das sich durch die Dicke der besagten Speiche (4) erstreckt.

3. Steuervorrichtung für ein Schallsignalgerät (7) nach Anspruch 2, **dadurch gekennzeichnet, daß** das besagte Verbindungselement aus einer im Wesentlichen starren Stange (14) gebildet ist, die mit Einrichtungen (18; 19) zum Betätigen der besagten elektrischen Kontakteinrichtungen (15) versehen ist.

4. Steuervorrichtung für ein Schallsignalgerät nach einem vorangehenden Anspruch, **dadurch gekennzeichnet, daß** die besagten Kontakteinrichtungen (15) einen elektrischen Schalter umfassen, der aus einem Paar leitfähige Elemente (16a; 16b) gebildet ist, die auf dem besagten Verbindungselement (14) einander zugewandt und voneinander beabstandet montiert sind und in Bezug zu einem festen leitfähigen Element (17) bewegbar sind, das auf der Speiche (4) an einer zwischen den leitfähigen Elementen (16a; 16b) liegenden Zwischenposition montiert ist.

5. Steuervorrichtung für ein Schallsignalgerät nach einem vorangehenden Anspruch, **dadurch gekennzeichnet, daß** der besagte zweite Drucktaster (11) die besagten elektrischen Kontakteinrichtungen (15) unabhängig von dem besagten ersten Drucktaster betätigt.

6. Steuervorrichtung für ein Schallsignalgerät nach einem vorangehenden Anspruch, **dadurch gekennzeichnet, daß** der besagte zweite Drucktaster (11) aus einer Rückseite (12) der besagten Speiche (4) übersteht, um die Lokalisierung des besagten Drucktasters (11) durch die Finger des Fahrers zu erleichtern, die die Rückseite des besagten Lenkrades (1) in Bezug zum Fahrer greifen.

## Revendications

1. Dispositif de commande d'un indicateur acoustique (7) pour le volant (1) d'un véhicule à moteur, comprenant des moyens (8) de commande du dit indicateur acoustique (7) placés sur au moins un rayon (4) du dit volant (1) et actionnables par au moins un des doigts du conducteur, et des moyens de contact électrique (15) placés sur le dit rayon (4) et actionnés par les dits moyens de commande (8) pour activer le dit indicateur acoustique (7), **caractérisé en ce que** les dits moyens de commande (8) comprennent un premier bouton-poussoir (9) et un deuxième bouton-poussoir (11) pour activer le dit indicateur acoustique (7) disposés sur des faces opposées (10 ; 12) du dit au moins un rayon (4), chacun des dits boutons-poussoirs (9 ; 11) pouvant actionner les dits moyens de contact (15) pour activer le dit indicateur acoustique (7).

2. Dispositif de commande pour un indicateur acoustique (7) selon la revendication 1, **caractérisé en ce que** les dits boutons-poussoirs (9 ; 11) sont reliés par un élément de liaison (14) qui s'étend à travers l'épaisseur du dit rayon (4).

3. Dispositif de commande pour un indicateur acoustique (7) selon la revendication 2, **caractérisé en ce que** le dit élément de liaison est constitué par une barre sensiblement rigide (14) comportant des moyens (18 ; 19) pour actionner les dits moyens de contact électrique (15).

4. Dispositif de commande pour un indicateur acoustique selon une quelconque des revendications précédentes, **caractérisé en ce que** les dits moyens de contact (15) comprennent un commutateur électrique constitué par deux éléments conducteurs (16a ; 16b) montés en regard et à distance l'un de l'autre sur le dit élément de liaison (14) et déplaçables par rapport à un élément conducteur fixe (17) monté sur le rayon (4) dans une position intermédiaire entre les éléments conducteurs (16a ; 16b).

5. Dispositif de commande pour un indicateur acoustique selon une quelconque des revendications précédentes, **caractérisé en ce que** le dit deuxième bouton-poussoir (11) actionne les dits moyens de contact électrique (15) indépendamment du dit premier bouton-poussoir.

6. Dispositif de commande pour un indicateur acoustique selon une quelconque des revendications précédentes, **caractérisé en ce que** le dit deuxième bouton-poussoir (11) fait saillie par rapport à une face arrière (12) du dit rayon (4) pour faciliter la localisation du dit bouton-poussoir (11) par les doigts du conducteur qui saisissent l'arrière du dit volant (1) par rapport au conducteur.
